# EUROPEAN PATENT SPECIFICATION

(11) **EP 2 799 248 B1**
(45) Date of publication and mention of the grant of the patent: **06.09.2017**
(21) Application number: 12861816.2
(22) Date of filing: 28.12.2012
(51) Int. Cl.: B60C 11/00, B29C 33/02, B29L 30/00, B29D 30/06, B29D 30/66, B29C 33/42

(54) **TIRE AND TIRE-FORMING MOLD**
REIFEN UND REIFENFORM
PNEUMATIQUE ET MOULE À PNEUMATIQUE

(30) Priority: 28.12.2011 JP 2011289388
(43) Date of publication of application: 05.11.2014
(73) Proprietor: Bridgestone Corporation, Tokyo 104-8340 (JP)
(72) Inventor: WATABE, Ryoichi, Kodaira-shi Tokyo 187-8531 (JP)
(74) Representative: Oxley, Robin John George
(86) International application number: PCT/JP2012/084308
(87) International publication number: WO 2013/100201

(56) References cited:
- EP-A2- 1 097 825
- WO-A1-2011/118856
- JP-A- H0 274 404
- JP-A- H0 274 404
- JP-A- H07 257 111
- JP-A- 2002 067 621
- JP-A- 2002 248 911
- JP-A- 2010 260 406
- JP-A- 2010 260 406
- US-A1- 2011 247 740
- US-A1- 2011 297 288

## Description

### TECHNICAL FIELD

The present invention relates to tires and tire forming molds, and more particularly, to tires that are excellent in on-ice performance and on-snow performance, and tire forming molds used for manufacturing the same.

### BACKGROUND ART

Conventionally, various contrivances have been made for improving the on-ice performance and on-snow performance of winter tires.

For example, a technology which increases edge components present in a contact patch and simultaneously improves the snow-gripping effect and the travelling performance on icy and snowy road surfaces (iced road surfaces and snowed road surfaces) of tires, by providing a plurality of sipes on each block formed on a tread, is proposed in JP 2002-192914 A (PTL 1).

In addition, for example, JP H11-301217 A (PTL 2) proposes a technology which uses foamed rubber as a cap rubber on a tire having a tread rubber with a so-called cap-and-base structure comprising a cap rubber and a base rubber, thereby significantly improving the drainage performance and the on-ice performance and on-snow performance of the tire.

Also, for example, JP 2009-67378 A (PTL 3) proposes, as is shown in FIG. 1(a), for the surface properties of the tread portion 1 of the tire, a technology which increases the roughness of the surface, increases the frictional force between the tire surface and a road surface, and improves the on-ice performance and on-snow performance of the tire, by providing protrusions 2 with a sharp-ended shape on the surface of the tread portion. Attention is also drawn to the disclosure of US 2011/247740, US2011/297288 EP 1,097,825 and WO2011/118856.

### CITATION LIST

### Patent Literature

PTL 1: JP 2002-192914 A
PTL 2: JP H11-301217 A
PTL 3: JP 2009-67378 A

### SUMMARY OF INVENTION

### (Technical Problem)

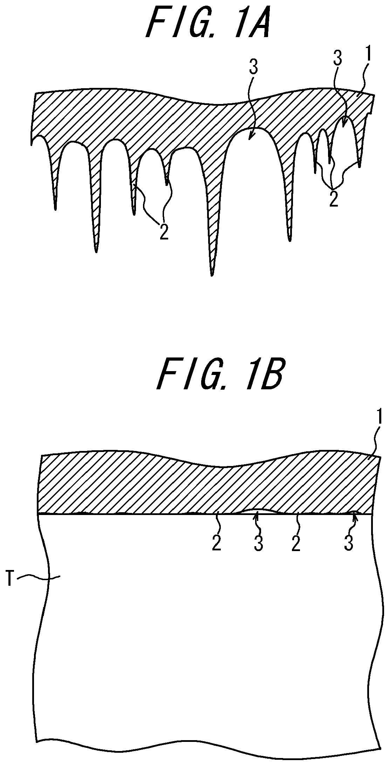

However, in the technology disclosed in PTL 1 which provides sipes on each block, there is a problem that if the number of sipes is increased too much, the block rigidity will be decreased and collapsing of a block may easily happen, which causes a reduction in the ground contact area and, rather, degrades the on-ice performance and on-snow performance.
In addition, in the technology disclosed in PTL 2 using foamed rubber for the cap rubber, there are cases where a reduction in the rigidity of the entire blocks is caused by usage of foamed rubber, so that the wear resistance of the tire is not always sufficient.
Further, for example, in the technology disclosed in PTL 3 which provides protrusions with a sharp-ended shape on the surface of the tread, due to the fact that the rigidity of the protrusion is low, there are cases where the protrusions collapse and the desired performance cannot be obtained, particularly when a large load is placed on the tire, such as when the load on the front wheel is increased due to nose diving of the vehicle, etc. Namely, in the technology providing protrusions with a sharp-ended shape on the surface of the tread portion, there are cases that protrusions 2 collapse due to the contacting with road surface T, the volume of gaps 3 for water removing is reduced, the drainage is reduced, and consequently the desired on-ice performance and on-snow performance may not be obtained, as is shown in FIG. 1(b). Therefore, there is still room for further improvement of the on-ice performance and on-snow performance in the technology disclosed in PTL 3. In addition, as the result of repeated study by the inventor on tires applying the technologies disclosed in PTL 1 to 3, a problem is also found that the on-ice performance and on-snow performance cannot be sufficiently obtained on those conventional tires, particularly new tires, due to the effect of chemicals attached to the tire surface during the tire production process. Therefore, there is still room for further improvement of the on-ice performance and on-snow performance of, in particular, new tires, in the technologies disclosed in PTL 1 to 3.
In addition, as the result of repeated study by the inventor on tires applying the technologies disclosed in PTL 1 to 3, a problem is also found that the on-ice performance and on-snow performance cannot be sufficiently obtained on those conventional tires, particularly new tires, though the reason is not clear. Therefore, there is still room for further improvement of the on-ice performance and on-snow performance of, in particular, new tires, in the technologies disclosed in PTL 1 to 3.

An object of the present invention is to solve the aforementioned problems, and to provide a tire with improved on-ice performance and on-snow performance and a tire forming mold used for manufacturing (forming) the same.

### (Solution to Problem)

The inventor has intensively studied to solve the problems aforementioned.
As a result, the present inventor has completed the present invention by finding that by forming a predetermined microstructure on the tread surface of the tread portion, it is possible to suppress the reduction of the block rigidity and the drainage performance of a tire, thereby to obtain further improved on-ice performance and on-snow performance of the tire, and to allow the tire to exhibit sufficient on-ice performance and on-snow performance even when the tire is brand new.

The present invention is made based on the findings above, and the primary features thereof are summarized as follows.
The tire of the present invention is according to claim 1. According to the constitution, the maximum profile peak height Rp is 5µm or more and 70µm or less on at least a part of the tread surface of the tread portion, and consequently it is possible to further suppress the degradation of the block rigidity and the drainage performance, and simultaneously improve the on-ice performance and on-snow performance of the tire sufficiently.
Namely, for the surface properties of the tread surface of the tread portion, the maximum profile peak height Rp is 5µm or more, therefore the water-removing space may be ensured, while the maximum profile peak height Rp is 70µm or less, therefore the frictional force between the tire and the road surface may be ensured.
As used herein, the term "maximum profile peak height Rp" refers to the "maximum profile peak height Rp" specified by JIS B 0601 (2001). Note that Rp may be determined by measuring the peak height existing in a unit length (1mm).

In addition, the tire forming mold of the present invention is according to claim 2.
In this way, it is possible to form the aforementioned tire excellent in on-ice performance and on-snow performance, in which at least a part of the tread surface of the tread portion has a surface roughness at which the maximum profile peak height Rp is 5µm or more and 70µm or less.

### (Advantageous Effect of Invention)

According to the present invention, it is possible to provide a tire with improved on-ice performance and on-snow performance and also a tire forming mold that can be used for forming the same.

### BRIEF DESCRIPTION OF DRAWINGS

The present invention will be further described below with reference to the accompanying drawings, wherein:
FIG. 1(a) is a schematic sectional view schematically showing the tread surface of the tread portion of a conventional tire. FIG. 1(b) is a schematic sectional view schematically showing the state where the tread surface of the tread portion of the tire is in contact with the road surface in the case where a load is placed upon the tire.
FIG. 2 is a sectional view of the tire according to an embodiment of the present invention taken along the tire width direction.
FIG. 3 schematically shows an enlarged view of the shape of a part of the tread surface of the tread portion of the tire shown in FIG. 2, where (a) is a plan view and (b) is a sectional view taken along the tire width direction.
FIG. 4 shows an SEM image (Scanning Electron Microscope image) of the tread surface of the tread portion of an example of the tire of the present invention.
FIG. 5 is a schematic perspective view schematically showing a part of the tire forming mold according to an embodiment of the present invention.
FIG. 6 schematically shows an enlarged view of the shape of a part of the tread-surface molding surface of the tire forming mold shown in FIG. 5, where (a) is a plan view and (b) is a sectional view taken along the width direction.
FIGS. 7(a) to (c) are other examples of the shape of a part of the tread surface of the tread portion of a tire which is not according to the present invention, but is useful for understanding the present invention.

### DESCRIPTION OF EMBODIMENTS

The tire and the tire forming mold of the present invention is explained hereinafter. The tire of the present invention is characterized in that a predetermined microstructure is formed on at least a part of the tread surface (the surface that contacts a road surface) of the tread portion, and the tread portion has predetermined surface properties (tread surface properties). Additionally, the tire forming mold of the present invention is used for manufacturing the tire of the present invention, characterized in that the tread-surface molding surface has predetermined surface properties by forming a predetermined microstructure on the inner surface of the mold, specifically at least a part of the tread-surface molding surface for molding the tread surface of the tire.

### <Tire>

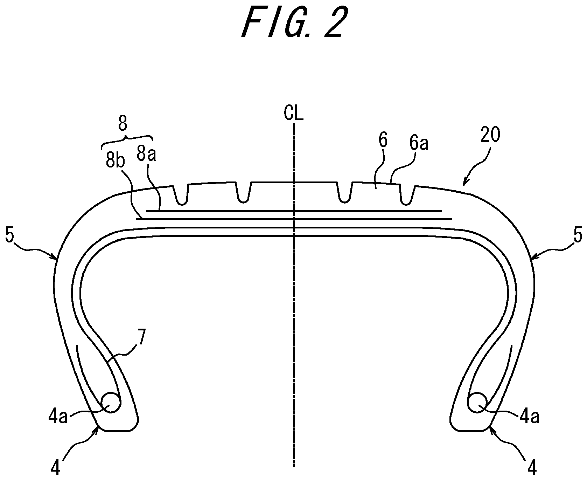

FIG. 2 is a sectional view of the tire according to an embodiment of the present invention taken along the tire width direction.
As is shown in FIG. 2, a tire 20 according to the embodiment of the present invention has a pair of bead portions 4, a pair of sidewall portions 5, each extending outwardly in the tire radial direction from each bead portion 4, and a tread portion 6 extending between the sidewall portions 5.
In addition, the tire 20 of the embodiment has a carcass 7 toroidally extending between a pair of bead cores 4a which are embedded in the pair of bead portions 4, and a belt 8 including belt layers 8a and 8b which are disposed on the outside of the carcass 7 in the tire radial direction. Further, a tread rubber made from non-foamed rubber is disposed on the outside of belt 8 in the tire radial direction.

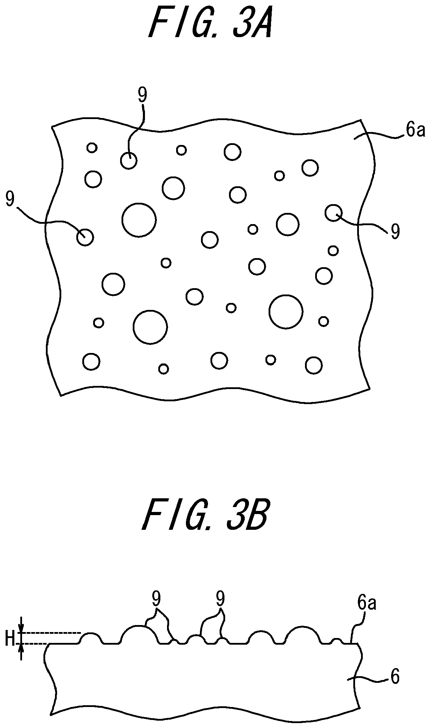

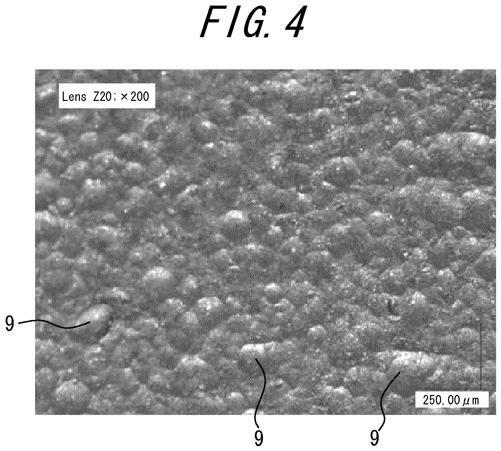

Here, micro protrusions with a predetermined shape are formed on at least a part of the tread surface (in this embodiment, the entire tread surface) of the tire 20. Specifically, according to an enlarged plan view of a surface 6a of the tread portion 6 shown in FIG. 3(a), an enlarged view of the tread portion 6 on the surface 6a side along the tire width direction shown in FIG. 3(b), and an SEM image of a part of the tread surface shown in FIG. 4, the tire according to this embodiment has a large number of micro protrusions 9, each being convex outwardly in the tire radial direction (of hemispherical shape, in the illustrated example) formed on the outside of the entire tread surface 6a of the tread portion, and at least a part of the tread surface 6a of the tread portion has a surface roughness at which the maximum profile peak height is 5µm or more and 70µm or less.

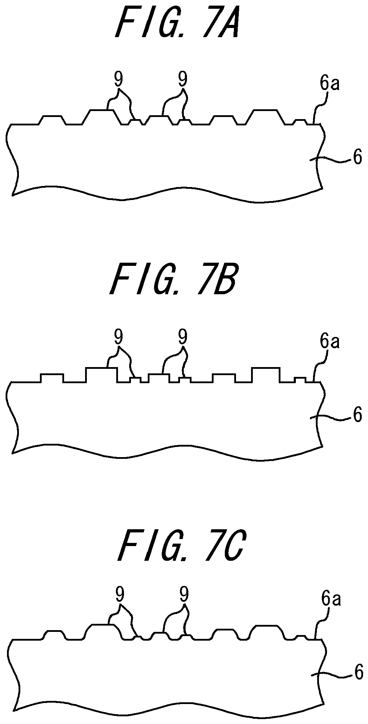

FIG. 3 shows a case that the protrusions 9 are hemispherical protrusions. FIGS. 7(a) to (c), which are not according to the present invention, show protrusions of various shapes. The protrusions shown in FIG. 7(a) are of trapezoidal cross section shape, including truncated conical shape and truncated pyramidal shape. The protrusions shown in FIG. 7(b) are of rectangular cross section shape, including cylindrical shape and prismatic shape. The protrusions shown in FIG. 7(c) are of truncated hemispherical shape.

Additionally, in the tire 20, the tread surface of the tread portion has a surface roughness at which the maximum profile peak height Rp is 5µm or more and 70µm or less, and consequently it is possible to suppress the degradation of the block rigidity and the drainage performance, and simultaneously improve the on-ice performance and on-snow performance of the tire sufficiently.
Namely, in the tire 20, for the surface properties of the tread surface, the maximum height of profile peak Rp is 5µm or more, and therefore the water-removing space may be ensured, while the maximum height of profile peak Rp is 70µm or less, and therefore the frictional force between the tire and the road surface may be ensured.
Further, in the tire 20, the suppression of the degradation of the drainage performance and the improvement of the on-ice performance and on-snow performance is accomplished by forming micro protrusions 9 having a predetermined shape, and therefore there is no need to form an excessive number of sipes, or utilize foamed rubber, etc.
In addition, the tire 20 may exhibit sufficient on-ice performance and on-snow performance even when the tire is new (in unused state), although the reason is not clear.

Therefore, with the tire 20, it is possible to further improve the on-ice performance and on-snow performance of the tire even when it is new, by suppressing the reduction of the block rigidity and the drainage performance.

Here, for the tire 20, it is more preferable that the part with protrusions 9 formed thereon has surface properties having a surface roughness at which the maximum profile peak height Rp is 10µm or more and 40µm or less, for the same reason.

In addition, for the tire 20, the protrusions 9 have a hemispherical shape. This is because if the protrusions 9 have a hemispherical shape, the protrusions 9 are unlikely to collapse and the drainage performance may be ensured.

Further, for the tire 20, it is preferable that the height H of the protrusions 9 formed on the tread surface of the tread portion is 1 to 50µm. This is because that if the height H is set to be 1µm or more, it is possible to improve the drainage performance by ensuring a sufficient volume of gaps among the protrusions 9. In addition, if the height H of the protrusions 9 is set to be 50µm or less, it is possible to sufficiently ensure the drainage performance by increasing the rigidity of the protrusions 9.
Protrusion height refers to the distance along the tire radial direction between a first imaginary plane perpendicular to a tire radial direction line extending across the distal ends of the protrusions (the outer ends in the tire radial direction), and a second imaginary plane closest to the first imaginary plane among the imaginary planes contacting the outer contour line of the protrusions 9 and perpendicular to the tire radial direction line. Note that the "protrusion number" and "protrusion height" of the present invention may be measured, for example, by enlarging the tread surface of the tread with an SEM or a microscope.

Additionally, for the tire of the present invention,
protrusions with a height H of more than 20µm are formed in a number density of 80/mm² or more on at least a part of the tread surface of the tread. In this way, it is possible to further suppress the degradation of block rigidity and drainage performance, and simultaneously improve the on-ice performance and on-snow performance of tires.
Namely, for the surface properties the tread surface of the tread portion, protrusions having a height of 20µm or more are formed, and therefore it is possible to ensure the water-removing space between the protrusions, while protrusions having a height of 20µm or more are formed in a number density of 80/mm² or more, and therefore it is possible to ensure the ground contact area of the protrusions.
Further, for the same reason, it is preferable that the part with protrusions 9 with a height of more than 20µm formed thereon has a number density of protrusions of 150/mm² or more. It is more preferable that the number density of the protrusions with a height of more than 20µm is 150/mm² or more and 250/mm² or less.
Additionally, it is preferable that protrusions with a preferable protrusion height of more than 30µm are formed in a number density of 100/mm² or more. Additionally, it is preferable that the protrusion height is less than 50µm. This is because that if the protrusion height is 50µm or more, there is a possibility that the protrusion rigidity is degraded, and in the case where a large load is placed on the tire, protrusions may collapse and fail to provide braking force. Here, the "protrusion number" and "protrusion height" of the present invention may be measured, for example, by enlarging the tread surface of the tread with an SEM or a microscope.

Here, for the tire of the present invention, it is preferable that at least a part of the tread surface of the tread portion has a surface roughness at which the roughness motif maximum length A is 5µm or more and 100µm or less. According to the constitution, the tread surface of the tread portion has a surface roughness at which the roughness motif maximum length is 5µm or more and 100µm or less, and consequently it is possible to further suppress the degradation of the block rigidity and the drainage performance, and simultaneously further improve the on-ice performance and on-snow performance of the tire sufficiently.
Namely, for the surface properties of the tread surface of the tread portion, the roughness motif maximum length A is 5µm or more, therefore the water-removing space may be ensured, while the upper limit of the roughness motif maximum length is 100µm, therefore the frictional force between the tire and the road surface may be ensured.
Further, it is more preferable that the part with protrusions 9 formed thereon has surface properties having a surface roughness at which the roughness motif maximum length A is 20µm or more and 80µm or less, for the same reason.
As used herein, the term "roughness motif maximum length A" refers to the "roughness motif maximum length A" specified by JIS B 0631 (2000), and is measured with a microscope, etc., under no-load condition.

Further, it is preferable that the tire of the present invention has a surface roughness at which the mean height of profile elements Rc is 1µm or more and 50µm or less, on at least a part of the tread surface of the tread portion.
In this way, it is possible to further suppress the degradation of block rigidity and drainage performance, and simultaneously improve the on-ice performance and on-snow performance of tires. Additionally, by setting the surface roughness of the tread surface of the tread portion to have a mean height of profile elements Rc of 1µm or more and 50µm or less, it is possible to further suppress the degradation of the block rigidity and the drainage performance, and simultaneously improve the on-ice performance and on-snow performance of the tire sufficiently. Namely, for the surface properties of the tread surface of the tread portion, by setting the mean height of profile elements Rc to be 1µm or more, the water-removing space may be ensured, while by setting the mean height of profile elements Rc to be 50µm or less, the protrusion rigidity may be ensured. Further, it is more preferable that the part has surface properties having a surface roughness at which the mean height of profile elements Rc is 10µm or more and 40µm or less, for the same reason.
As used herein, the term "mean height of profile elements Rc" refers to the "mean height of profile elements Rc" specified by JIS B 0601 (2001). As the measuring condition, Rc may be determined by measuring the heights of the peaks existing in a unit length (1mm), and averaging the same excluding the heights of those peaks included in the range of 10% higher and lower than a height reference.

Here, it is preferable that the ten-point average roughness Rz of the tread surface of the tread portion of the tire with protrusions with a hemispherical shape formed thereon is 1.0 to 50µm.
The reason is that by setting Rz to be 1.0µm or more, the gaps for water removing may be ensured, while by setting Rz to be 50µm or less, the contacting area with the road surface may be ensured, and thereby it is possible to further improve the on-ice performance and on-snow performance of the tire.
As used herein, the term "ten-point average roughness Rz" refers to a value measured in accordance with the provisions of JIS B0601 (1994), based on the reference length of 0.8mm and the evaluation length of 4mm.

In addition, it is preferable that the mean spacing S of local peaks of the protrusions 9 formed on the tread surface of the tread portion of the tire is set to be 5.0 to 100µm.
The reason is that by setting spacing S to be 5.0µm or more, the gaps for water removing may be ensured, while by setting spacing S to be 100µm or less, the contacting area with the road surface may be ensured, and thereby it is possible to further improve the on-ice performance and on-snow performance of the tire.
As used herein, the term "mean spacing of local peaks" refers to a value measured in accordance with the provisions of JIS B0601 (1994), based on the reference length of 0.8mm and the evaluation length of 4mm.

Additionally, the aforementioned tire is not particularly limited and may be manufactured with the tire forming mold as follows. Further, the forming of the tire utilizing the tire forming mold as follows may be performed with ordinary methods.

### <Tire forming mold>

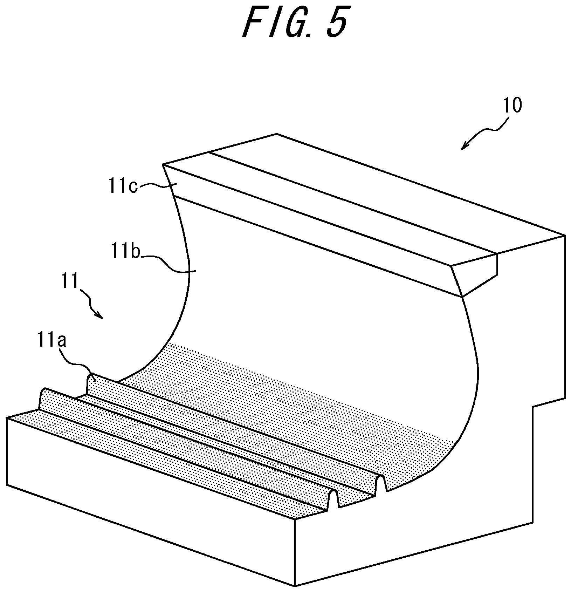

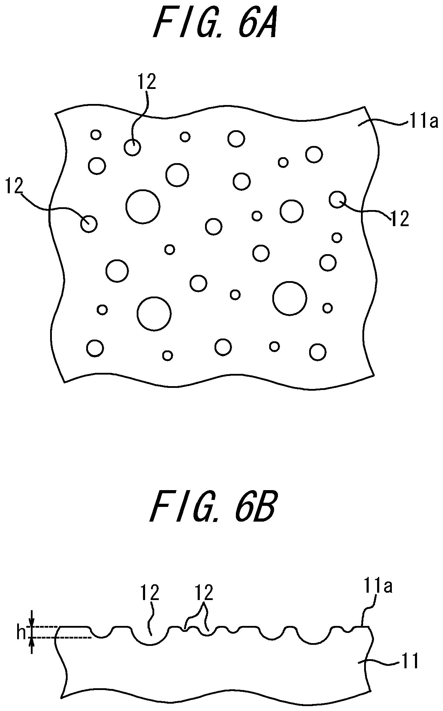

FIG. 5 is a schematic partial perspective view showing a part of the tire forming mold utilized in forming the tire of the present invention.
As is shown in FIG. 5, the mold 10 has a molding surface 11 for the vulcanization forming of the tire.
The molding surface 11 has a tread-surface molding surface 11a for molding the tread surface of the tread portion, and according to the example as shown, it also has a sidewall-portion molding surface 11b for molding the outside surface of a sidewall portion, and a bead-portion molding surface 11c for molding the outside surface of the bead portion.
The molding surface 11 is not particularly limited, and may be formed with aluminum, for example.
The tread surface of the tread portion of the tread portion of the tire of the present invention having the aforementioned surface properties may be formed with a tire vulcanization mold 10 comprising the tread-surface molding surface 11a having the aforementioned surface properties. Specifically, as shown in the enlarged plan view of the tread-surface molding surface 11a in FIG. 6(a) and in the enlarged cross-sectional view taken along the width direction of the mold 10 on the tread-surface molding surface 11a side in FIG. 6(b), the tire-forming mold 10 according to the present embodiment has a large number of recesses 12 on the entire tread surface molding surface 11a for molding the tread surface of the tread portion of the tire. Additionally, at least a part of the tread-surface molding surface (in the illustrated example, the entire tread-surface molding surface) has a surface roughness at which the maximum profile peak height Rp is 5µm or more and 70µm or less. FIG. 6 illustrates a case that the recesses 12 are recesses with a hemispherical shape.
Namely, in the tire vulcanization process utilizing the mold 10, the surface shape of the tread-surface molding surface 11a of mold 10 is transferred as the surface shape of the tread surface of the tread portion of the tire. Additionally, a large number of protrusions 9 are formed on the tread surface of the tread portion of the manufactured tire, and the tread surface of the tread portion has a surface roughness at which the maximum profile peak height Rp is 5µm or more and 70µm or less. Therefore, it is possible to form a tire excellent in on-ice performance and on-snow performance.
The method for molding the tread-surface molding surface 11a of mold 10 will be explained hereinafter.

The aforementioned tread-surface molding surface 11a may be formed via a blast material blasting process whereby blast materials of a particular shape are blasted and forced to impact the molding surface. Additionally, the tire forming mold obtained via the blast material blasting process has a large number of the aforementioned recesses 12 on the tread-surface molding surface, and has a surface roughness at which maximum profile peak height Rp is 5µm or more and 70µm or less, on at least a part of the tread-surface molding surface, and consequently the tread surface of the tread portion of the tire vulcanization formed utilizing the mold has the aforementioned surface roughness at which the maximum profile peak height Rp is 5µm or more and 70µm or less.
Here, in the blast material blasting process, it is preferable that the aforementioned tread-surface molding surface 11a (entirely or partially) is formed by blasting spherical blast materials with a sphericity of 15µm or less and forcing the same to impact the tread-surface molding surface.
This is because that by setting the sphericity of the blast materials to be 15µm or less, recesses with desired properties may be formed on the tread-surface molding surface of the mold, and it is possible to shape the tread surface of the tread portion of the tire formed by utilizing the mold into a desired surface shape.

Further, it is more preferable that the sphericity of the blast materials herein is set to be 10 µm or less.
This is because that a large number of recesses with desired properties may be easily formed on the tread-surface molding surface of the mold by setting the sphericity of the blast materials to be 10 µm or less, and consequently, it is possible to form tires with further improved on-ice performance and on-snow performance by forming a large number of protrusions with a desired shape on the tread surface of the tread portion of the tire formed by utilizing the mold. In addition, it is more preferable that the sphericity of the blast materials herein is set to be 5 µm or less.
This is because that in this way, recesses with desired properties may be more easily formed on the tread-surface molding surface of the mold.

Here, it is preferable that the average particle size of the blast materials utilized in the blast material blasting process is set to be 10 µm to 1mm.
This is because that by setting the average particle size of the blast materials to be 10µm or more, a mold having recesses of desired shape on its tread-surface molding surface may be obtained easily, and in the blast material blasting process, it is possible to suppress the splashing around of the blast materials in the case of high-pressure blasting, while by setting the average particle size of the blast materials to be 1mm or less, it is possible to suppress the rapid wearing of the mold surface.
For the same reason, it is more preferable that the average particle size of the blast materials is set to be 20µm to 0.7mm, still more preferably 30µm to 0.5mm.
As used herein, the term "average particle size" refers to the value obtained by imaging blasting materials with SEM, then randomly taking out 10 blasting materials therefrom, obtaining the average value of the diameter of the inscribed circle and the diameter of the circumscribed circle of each blast material, and averaging the results of the 10 blast materials.

In addition, it is preferable that the Mohs hardness of the blast materials is set to be 2 to 10.
This is because that by setting the Mohs hardness of the blast materials to be 2 or more, a mold having recesses of desired shape on its tread-surface molding surface may be obtained more easily. On the other hand, by setting the Mohs hardness of the blast materials to be 10 or less, the mold may be less prone to rapid deterioration.
For the same reason, it is more preferable that the Mohs hardness of the blast materials is set to be 3.0 to 9.0, still more preferably 5.0 to 9.0.
In addition, it is preferable that the Mohs hardness of the tread-surface molding surface of the tire forming mold is set to be 2.0 to 5.0, and that the difference between the Mohs hardness of the tread-surface molding surface of the tire forming mold and the blast materials is set to be 3.0 to 5.0.

Additionally, it is preferable that the specific gravity of the blast materials is set to be 0.5 to 20.
This is because that by setting the specific gravity of the blast materials to be 0.5 or more, the operability may be improved by suppressing the splashing around of the blast materials in the blasting process. On the other hand, by setting the specific gravity of the blast materials to be 20 or less, it is possible to reduce the energy needed for accelerating the blast materials, and to suppress the rapid wearing of the mold.
For the same reason, it is more preferable that the specific gravity of the blast materials is set to be 0.8 to 18, still more preferably 1.2 to 15.

Here, the material of the blast materials is not particularly limited, and it is preferable to utilize, for example, gyricon, iron, cast steel or ceramics.

In addition, in the blast material blasting process, it is preferable that the blast materials are blasted with high-pressure air of 100 to 1000kPa onto the tread-surface molding surface of the aforementioned mold for 30 seconds to 10 minutes.
This is because that by blasting the blast materials for 30 seconds or more under a pressure of 100kPa or more, it is possible to shape the tread-surface molding surface into the aforementioned desired shape thoroughly, while by blasting the blast materials for 10 minutes or less under a pressure of 1000kPa or less, it is possible to suppress the damage to the tread-surface molding surface.
Further, it is preferable that the blasting speed of the blast materials is set to be 0.3 to 10(m/s), more preferably 0.5 to 7(m/s), by adjusting the specific gravity and blasting pressure of the materials.
In this case, it is preferable that the distance between the nozzle for blasting the blast materials and the tire forming mold is set to be 50 to 200(mm). Here, the aforementioned blasting time of the blast materials refers to the blasting time for a single mold, for example, in the case that a single tire is formed utilizing 9 molds, it is preferable that blast materials are blasted for 270 seconds to 90 minutes in total onto the tread-surface molding surface of the 9 molds for forming a single tire.
In addition, the blasting of the blast materials onto the tread-surface molding surface of a single mold may be performed by the operator displacing the blasting position while considering the shape of the mold, etc. In this way, it is possible to blast the blast materials more uniformly.

Here, for the mold 10, it is more preferable that the tread-surface molding surface has surface properties having a surface roughness at which the maximum profile peak height Rp is 10µm or more and 40µm or less, and it is possible to form a tire excellent in on-ice performance and on-snow performance.
It is possible to control the maximum profile peak height Rp of the tread-surface molding surface by adjusting the blasting speed. Specifically, if the blasting speed is increased, the maximum profile peak height Rp may be increased.

In addition, in the mold 10, the shape of each recess 12 is hemispherical. This is because by shaping each recess 12 into a hemispherical shape, it is possible to form protrusions 9 of hemispherical shape on the tread surface of the tread portion. Further, it is possible to control the shape of recesses 12 by adjusting the particle size, the blasting speed and the blasting angle of the blast materials.

Further, in the mold 10, it is preferable that the depth h of each recess 12 is set to be 1 to 50µm. This is because that by setting the depth h of each recess 12 to be 1 to 50µm, it is possible to form protrusions 9 with a height of 1 to 50µm on the tread surface of the tread portion of the tire. Further, it is possible to control the depth h of recesses 12 by adjusting the blasting speed. Specifically, if the blasting speed is increased, the depth h may be increased. Here, the depth of each recess 12 refers to the distance along the radial direction between a third imaginary plane perpendicular to a radial direction line extending across the deepest portions (the inner ends in the radial direction) of the recesses 12 and a fourth imaginary plane closest to the third imaginary plane among the imaginary planes contacting the outer contour line of the recesses 12 and perpendicular to the radial direction line. Note that the term "radial direction" refers to a direction corresponding to the radial direction of the toroidal tread-surface molding surface, namely a direction corresponding to the tire radial direction of the tire formed by utilizing the mold 10.
Further, the depth of recesses 12 may be measured with an SEM or microscope.

In addition, the tire forming mold of the present invention is a tire forming mold, having a tread-surface molding surface for molding the tread surface of the tread portion of the tire, and recesses with a recess depth h of more than 20µm are formed in a number density of 80/mm² or more on at least a part of the tread-surface molding surface.
This is because that in this way, it is possible to form the aforementioned tire excellent in on-ice performance and on-snow performance, in which protrusions with a protrusion height of more than 20µm are formed in a number density of 80/mm² or more on at least a part of the tread surface of the tread portion.
Similarly, to obtain more desirable surface properties of the tread surface of the tread portion, it is preferable that the number density of recesses with a recess depth of more than 20µm is 150/mm² or more. It is more preferable that the number density of the recesses with a recess depth of more than 20µm is 150/mm² or more and 250/mm² or less. Additionally, it is preferable that recesses with a preferable recess depth of more than 30µm are formed in a number density of 100/mm² or more. In addition, it is preferable that the recess height is less than 50µm.
Further, it is possible to control the number density of the recesses on the tread-surface molding surface of the mold by adjusting the particle size and particle number of the blasting materials. Specifically, if the particle size of the blast materials is increased, the number density may be increased. In addition, if the particle size of the blast materials is increased, the number density may be reduced. In addition, it is possible to control the recess depth of the tread-surface molding surface of the mold by adjusting the blasting speed of the blast materials. Specifically, if the blasting speed of the blast materials is increased, the recess depth may be increased.
Here, the "recess number density" and "recess depth" of the present invention may be measured, for example, by enlarging the tread surface of the tread portion of the tread with an SEM or a microscope.

Here, the tire forming mold of the present invention is a tire forming mold, having a tread-surface molding surface for molding the tread surface of the tread portion of the tire, and it is preferable that at least a part of the tread-surface molding surface has a surface roughness at which the roughness motif maximum length A is 5µm or more and 100µm or less.
In this way, it is possible to form the aforementioned tire excellent in on-ice performance and on-snow performance, and at which at least a part of the tread surface of the tread portion has a surface roughness at which the roughness motif maximum length A is 5µm or more and 100µm or less.
Here, it is preferable that the tread-surface molding surface of the mold has surface properties having a surface roughness at which the roughness motif maximum length A is 20µm or more and 80µm or less. This is because that it is possible to mold a tread surface of the tread portion of the formed tire with surface properties at which the roughness motif maximum length A is 20µm or more and 80µm or less, and it is possible to form a tire excellent in tire on-ice performance and on-snow performance.
In addition, it is possible to control the roughness motif maximum length A of recesses 12 by adjusting the particle size of the blast materials. Specifically, if the particle size of the blast materials is increased, the roughness motif maximum length A may be increased.

Further, the tire forming mold of the present invention is a mold for tire forming, having a tread-surface molding surface for molding a tread surface of the tread portion, and it is preferable that at least a part of the tread-surface molding surface has a surface roughness at which the mean height of profile elements Rc is 1µm or more and 50µm or less.
This is because that in this way, it is possible to form the aforementioned tire excellent in on-ice performance and on-snow performance, in which at least a part of the tread surface of the tread portion has a surface roughness at which the mean height of profile elements Rc is 1µm or more and 50µm or less. Here, it is more preferable that the tread-surface molding surface of the mold has surface properties having a surface roughness at which the mean height of profile elements Rc is 10µm or more and 40µm or less. This is because that it is possible to mold a tread surface of the tread portion of the formed tire with surface properties at which the mean height of profile elements Rc is 10µm or more and 40µm or less, and it is possible to form a tire excellent in on-ice performance and on-snow performance.
It is possible to control the mean height of profile elements Rc of the tread-surface molding surface by adjusting the blasting speed. Specifically, if the blasting speed is increased, the mean height of profile elements Rc may be increased.

Here, it is preferable that the ten-point average roughness Rz of the tread-surface molding surface of the mold is 1.0 to 50µm. This is because that it is possible to form a tire with the tread surface of the tread portion having a ten-point average roughness Rz of 1.0 to 50µm.
Note that by setting the average particle size of the blast materials used in the blast material blasting process to be 50 to 400µm, it is possible to obtain a tire-forming mold provided with a tread-surface molding surface having a ten-point average roughness Rz in the aforementioned range.

In addition, it is preferable that the recesses of the tread-surface molding surface of the mold have a mean spacing of local peaks of 5.0 to 100µm. This is because that it is possible to form a tire with the protrusions formed on the tread surface of the tread portion having a mean spacing S of local peaks of 5.0 to 100µm.
Further, by setting the average particle size of the blast materials utilized in the blast material blasting process to be 50 to 400µm, it is possible to obtain a tire forming mold including a tread-surface molding surface having a mean spacing S in the aforementioned range.

### EXAMPLES

The present invention will be explained in further detail below according to examples, although the present invention is not limited to the disclosed examples.

### (Manufacture of tire forming mold)

Tire forming molds 1 to 5 having tread-surface molding surfaces with surface properties as shown in Table 1 were manufactured by blasting (ceramic-based) blast materials to the tread-surface molding surfaces of tire forming molds made from aluminum, while changing the blasting conditions (such as blasting pressure and blasting speed). Further, the surface properties of the tread surfaces of the manufactured molds were measured with an SEM and a microscope. Tire forming mold 2 is not according to the present invention.

**Table 1**

| | Mold 1 | Mold 2 | Mold 3 | Mold 4 | Mold 5 |
|---|---|---|---|---|---|
| | Conventional example | Reference Example | Example | Example | Example |
| Presence/absence of recesses | Absence | Presence | Presence | Presence | Presence |
| Recess shape | - | Sharp (pointed) | Hemisphere | Hemisphere | Hemisphere |
| Roughness motif length A [µm] | - | 30 | 30 | 30 | 30 |
| Protrusions with a height of more than 20µm [/mm²] | - | 180 | 180 | 180 | 140 |
| Rc [µm] | - | 20 | 50 | 20 | 50 |
| Rp [µm] | - | 20 | 20 | 20 | 50 |

### (Manufacture of tire)

Tires 1 to 5 of tire size 205/55R16 were manufactured according to ordinary methods, by utilizing the manufactured tire forming molds 1 to 5, respectively. Additionally, the surface properties of the tread surfaces of the tread portion of the manufactured tires were measured by utilizing an SEM and a microscope. The results are as shown in Table 2. Tire 2 is not according to the present invention.

In addition, the on-ice performance and on-snow performance of each manufactured tire were evaluated with the evaluation method as follows. The results are as shown in Table 2.

### <On-ice performance>

As soon as each tire was manufactured, the tire was mounted on an approved rim, filled with a normal internal pressure specified by JATMA and installed onto a vehicle. Then, the on-ice friction coefficient was measured under the conditions of 4.3KN load on each front wheel and a speed of 30km/h on icy road. The on-ice friction coefficient of each tire was evaluated, with a score of 100 representing the on-ice friction coefficient of tire 1. The results are as shown in Table 2. The larger the value, the higher the on-ice friction coefficient is and the more excellent the on-ice performance is, as is shown in Table 2.

### <On-snow performance>

As soon as each tire was manufactured, the tire was mounted on an approved rim, filled with a normal internal pressure specified by JATMA and installed onto a vehicle. Additionally, the on-snow friction coefficient was measured under the conditions of 4.3KN load on each front wheel and a speed of 30km/h on snowy road. The on-snow friction coefficient of each tire was evaluated, with a score of 100 representing the on-snow friction coefficient of tire 1. The results are as shown in Table 2. The larger the value, the higher the on-snow friction coefficient is and the more excellent the on-snow performance is, as is shown in Table 2.

**Table 2**

| | Tire 1 | Tire 2 | Tire 3 | Tire 4 | Tire 5 |
|---|---|---|---|---|---|
| | Conventional example | Reference Example | Example | Example | Example |
| Presence/absence of protrusions | Absence | Presence | Presence | Presence | Presence |
| Protrusion shape | - | Sharp (pointed) | Hemisphere | Hemisphere | Hemisphere |
| Roughness motif length A [µm] | - | 30 | 30 | 30 | 30 |
| Protrusions with a height of more than 20µm [/mm²] | - | 180 | 180 | 180 | 140 |
| Rc [µm] | - | 20 | 20 | 20 | 50 |
| Rp [µm] | - | 20 | 50 | 20 | 50 |
| On-ice performance | 100 | 102 | 115 | 112 | 110 |
| On-snow | 100 | 101 | 112 | 110 | 108 |
| performance | | | | | |

It can be understood that comparing to tires according to the conventional example, the tire according to the examples of the present invention is more excellent in on-ice performance and on-snow performance, as is shown in Table 2.

### INDUSTRIAL APPLICABILITY

According to the present invention, it is possible to provide a tire with improved on-ice performance and on-snow performance and also a tire forming mold that can be used for forming the same.

### REFERENCE SIGNS LIST

- 1: tread portion
- 2: protrusion
- 3: gap
- 4: bead portion
- 4a: bead core
- 5: sidewall portion
- 6: tread portion
- 7: carcass
- 8: belt
- 8a, 8b: belt layer
- 9: protrusion
- 10: mold
- 11: molding surface
- 11a: tread-surface molding surface
- 11b: sidewall-portion molding surface
- 11c: bead-portion molding surface
- 12: recess
- 20: tire
- T: road surface

## Claims

1. A tire (20) comprising a tread portion (6) having a tread surface (6a), wherein at least a part of the tread surface (6a) of the tread portion (6) has a surface roughness at which the maximum profile peak height Rp specified by JIS B 0601 (2001) is 5µm or more and 70µm or less, wherein protrusions (9) each having a hemispherical shape are formed on at least the part of the tread surface (6a), and wherein the protrusions (9) are formed with a height H of more than 20µm in a number density of 80/mm² or more on at least the part of the tread surface (6a) of the tread portion (6).

2. A tire forming mold (10) comprising a tread-surface molding surface (11a) for molding a tread surface (6a) of a tire (20), wherein at least a part of the tread-surface molding surface (11a) has a surface roughness at which the maximum profile peak height Rp specified by JIS B 0601 (2001) is 5µm or more and 70µm or less, wherein recesses (12) each having a hemispherical shape are formed on at least the part of the tread-surface molding surface (11a), and wherein the recesses (12) are formed with a recess depth h of more than 20µm in a number density of 80/mm² or more on at least the part of the tread-surface molding surface (11a).

## Patentansprüche

1. Reifen (20), beinhaltend einen Laufflächenabschnitt (6), besitzend eine Laufflächenoberfläche (6a), wobei mindestens ein Abschnitt der Laufflächenoberfläche (6a) des Laufflächenabschnitts (6) eine Oberflächenrauheit besitzt, bei welcher die maximale Profil-Spitzenhöhe Rp, spezifiziert durch JIS B 0601 (2001), 5 µm oder mehr und 70 µm oder weniger beträgt, wobei Protrusionen (9), die jeweils eine Halbkugelform besitzen, an mindestens dem Abschnitt der Laufflächenoberfläche (6a) gebildet sind, und wobei die Protrusionen (9) mit einer Höhe H von über 20 µm in einer Anzahldichte von 80/mm² oder mehr an mindestens dem Abschnitt der Laufflächenoberfläche (6a) des Laufflächenabschnitts (6) gebildet sind.

2. Form zum Formen von Reifen (10), beinhaltend eine Laufflächenoberflächen-Formfläche (11a) zum Formen einer Laufflächenoberfläche (6a) eines Reifens (20), wobei mindestens ein Abschnitt der Laufflächenoberflächen-Formfläche (11a) eine Oberflächenrauheit besitzt, bei welcher die maximale Profil-Spitzenhöhe Rp, spezifiziert durch JIS B 0601 (2001), 5 µm oder mehr und 70 µm oder weniger beträgt, wobei Vertiefungen (12), die jeweils eine Halbkugelform besitzen, an mindestens dem Abschnitt der Laufflächenoberflächen-Formfläche (11a) gebildet sind, und wobei die Vertiefungen (12) mit einer Vertiefungstiefe h von über 20 µm in einer Anzahldichte von 80/mm² oder mehr an mindestens dem Abschnitt der Laufflächenoberflächen-Formfläche (11a) gebildet sind.

## Revendications

1. Pneu (20) comprenant une section de bande de roulement (6) ayant une surface de bande de roulement (6a), dans lequel au moins une partie de la surface de bande de roulement (6a) de la section de bande de roulement (6) a une rugosité de surface à laquelle la hauteur maximale des pics du profil Rp spécifiée par la norme JIS B 0601 (2001) est de 5 µm ou plus et de 70 µm ou moins, dans lequel des protubérances (9) ayant chacune une forme hémisphérique sont formées sur au moins la partie de la surface de bande de roulement (6a), et dans lequel les protubérances (9) sont formées avec une hauteur H de plus de 20 µm dans une concentration de 80/mm² ou plus sur au moins la partie de la surface de bande de roulement (6a) de la section de bande de roulement (6).

2. Moule de formation de pneu (10) comprenant une surface de moulage de surface de bande de roulement (11a) permettant de mouler une surface de bande de roulement (6a) d'un pneu (20), dans lequel au moins une partie de la surface de moulage de surface de bande de roulement (11a) a une rugosité de surface à laquelle la hauteur maximale des pics du profil Rp spécifiée par la norme JIS B 0601 (2001) est de 5 µm ou plus et de 70 µm ou moins, dans lequel des évidements (12) ayant chacun une forme hémisphérique sont formés sur au moins la partie de la surface de moulage de surface de bande de roulement (11a), et dans lequel les évidements (12) sont formés avec une profondeur d'évidement h de plus de 20 µm et une concentration de 80/mm² ou plus sur au moins la partie de la surface de moulage de surface de bande de roulement (11a).
